# EUROPÄISCHE PATENTANMELDUNG

(11) **EP 0 804 026 A2**
(43) Veröffentlichungstag der Anmeldung: **29.10.1997**
(21) Anmeldenummer: 97106314.4
(22) Anmeldetag: 17.04.1997
(51) Int. Cl.: H04N 5/63

(54) **Anordnung zur Abschaltung der Netzspannung eines elektrischen Gerätes**

(30) Priorität: 26.04.1996 DE 19616726
(71) Anmelder: DEUTSCHE THOMSON-BRANDT GMBH, 78048 Villingen-Schwenningen (DE)
(72) Erfinder: Roth, Harald, 78087 Mönchweiler (DE); Rilly, Gerard, 78089 Unterkirnach (DE); Platte, Hans-Joachim, 30966 Hemmingen (DE); Geiser, Jürgen, 78054 Villingen-Schwenningen (DE); Morizot, Gerard, 78048 Villingen-Schwenningen (DE)

(57) **Zusammenfassung**

Die Erfindung betrifft eine Anordnung zur Abschaltung der Netzspannung eines elektrischen Gerätes, das mittels Fernbedienung bedienbar ist und das einen verbrauchsarmen Standby-Betrieb aufweist. Befindet sich das Gerät im Standby-Betrieb, so wird nach einer gewissen Zeit durch die Anordnung das Gerät von der Netzspannung getrennt. Empfängt die Anordnung Infrarot-Signale einer beliebigen Fernbedienung, so schaltet es die Netzspannung zu dem Gerät durch, wodurch dieses wieder in den Standby-Betrieb und anschließend in den Normalbetrieb übergeht. Hierdurch wird der Energieverbrauch von Geräten im Standby-Betrieb unterdrückt.

Die Aufgabe der Erfindung ist es, eine Anordnung dieser Art anzugeben, die selbst ein sehr geringen Energieverbrauch aufweist, insbesondere deren Energieverbrauch sehr klein gegenüber eines Gerätes im Standby-Modus ist. Die Erfindung ist hierfür mit einer sehr verlustarmen internen Stromversorgung ausgestattet und benutzt nur sehr wenige elektronische Bauelemente mit geringem Energieverbrauch. Zusätzlich ist die Anordnung mit einem Nullspannungsschalter versehen, der eine störungsarme Durchschaltung der Netzspannung bewirkt.

Anwendungen der Erfindung ergeben sich insbesondere für Fernsehgeräte und HiFi-Anlagen.

Der Energieverbrauch der Anordnung selbst beträgt nur etwa 0,1 W.

## Beschreibung

Die vorliegende Erfindung betrifft eine Anordnung zur Abshaltung der Netzspannung eines elektrischen Gerätes nach dem Oberbegriff des Anspruchs 1.

Moderne Geräte der Unterhaltungselektronik, z. B. Fernseher und HiFi-Anlagen, sind üblicherweise mittels einer Infrarot-Fernbedienung bedienbar und weisen einen leistungsarmen Standby-Betrieb auf, aus dem heraus sie mittels der Fernbedienung wieder einschaltbar sind. Ist das Gerät ganz ausgeschaltet, so muß es manuell wieder eingeschaltet werden.

Der Standby-Betrieb dieser Geräte weist üblicherweise noch eine Leistung von einigen Watt, häufig auch Leistungen zwischen 5 und bis über 10 W auf. Beim längeren Betrieb dieser Geräte im Standby-Betrieb kann sich dadurch ein beachtlicher Energieverbrauch aufsumieren.

Eine Anordnung zur Abschaltung der Netzspannung eines nachgeschalteten elektrischen Gerätes nach dem Oberbegriff des Anspruchs 1 ist aus der Zeitschrift ELVjournal 2/94, Seiten 16 - 19, bekannt. Diese Anordnung ist als separates Modul aufgebaut, das zwischen Steckdose und Gerät angeschlossen wird, und das dieses, wenn es sich im Standby-Betrieb befindet, nach einiger Zeit von der Netzspannung abtrennt. Das Modul enthält einen Infrarotsensor, der Infrarotsignale einer Fernbedienung detektiert, und das daraufhin das angeschlossene Gerät mit Netzspannung versorgt. Das Gerät ist daher im Standby-Betrieb durch das Modul vollständig vom Netz getrennt, ohne daß einem Benutzer hierdurch ein Nachteil entsteht. Diese Anordnung enthält allerdings einen Netztransformator mit einer integrierten Spannungsstabilisierung und mehrere integrierte Schaltungen, die selbst einen nicht unwesentlichen Energieverbrauch aufweisen.

Die Aufgabe der vorliegenden Erfindung ist es, eine Anordnung der eingangs genannten Art anzugeben, die mit einem sehr geringen Energieverbrauch auskommt und zudem einen störungsarmen Betrieb aufweist.

Diese Aufgabe wird durch die im Anspruch 1 angegebene Erfindung gelöst. Weiterbildungen der Erfindung sind in den Unteransprüchen angegeben.

Die erfindungsgemäße Anordnung besitzt eine interne Spannungsversorgung, die nach dem Prinzip einer "Ladungspumpe" arbeitet und praktisch ohne Verluste ist. Die Versorgungsspannungen werden direkt aus der Netzspannung mittels kapazitiver Blindwiderstände und Zenerdioden erzeugt. Die Netzspannung kann vorteilhafterweise z.B. mittels eines Triacs, der nur eine sehr geringe Steuerspannung benötigt, zu einem nachgeschalteten Gerät durchgeschaltet werden. Zur Ansteuerung des Triacs wird eine integrierte Schaltung mit zwei Operationsverstärkern verwendet, die eine sehr geringe Verlustleistung aufweist.

Die Anordnung besitzt zudem einen Nullspannungsschalter, der bewirkt, das die Phase der Netzspannung bei einem Spannungsminimum zu dem Gerät durchgeschaltet wird. Insbesondere Netzgeräte von Fernsehgeräten können eine hohe kapazitive Last aufweisen, die beim Einschalten Ströme von bis zu 60 bis 70 A in einem Zeitraum von einigen Millisekunden ziehen. Durch den Nullspannungsschalter wird eine Strombegrenzung erzeugt, hohe Stromspitzen werden dadurch vermieden. Dies kommt neuen geplanten Normen entgegen, die eine weitere Begrenzung des Anfangsstromes von Schaltnetzteilen anstreben.

Die Anordnung ist sowohl als unabhängiges Modul, das direkt in eine Steckdose gesteckt wird, verwendbar als auch integriert, z.B. in einem Fernsehgerät. Bei Integration der Anordnung in ein Fernsehgerät kann die Strombegrenzung des zum Fernsehgerät gehörenden Schaltnetzteiles vereinfacht aufgebaut werden.

Anwendungen der Erfindung ergeben sich insbesondere für Fernsehgeräte und HiFi-Anlagen.

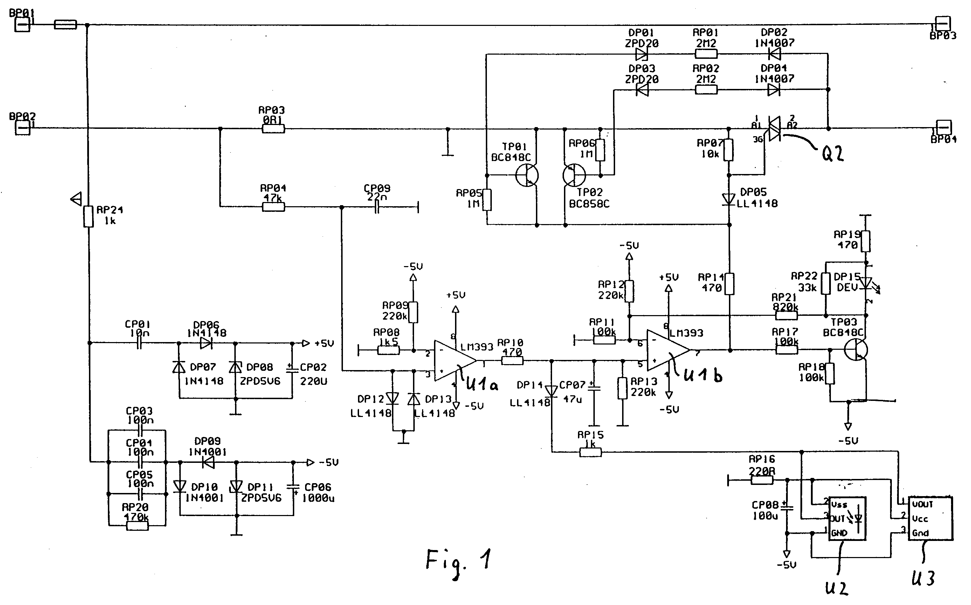

Ein vorteilhaftes Ausführungsbeispiel der Erfindung wird im folgenden anhand des in der Fig. 1 dargestellten schematischen Schaltplanes erläutert. Es zeigen:
- Fig. 1: eine Anordnung zur Abschaltung der Netzspannung eines elektrischen Gerätes.

Die Anordnung der Fig. 1 weist eine Eingangsseite mit Anschlüssen BP01 und BP02, die mit einer Netzspannung verbindbar ist, und eine Ausgangsseite mit Anschlüssen BP03 und BP04 auf. Eine an der Eingangsseite angelegte Netzspannung ist mittels eines Triacs Q2 auf die Ausgangsseite durchschaltbar. Anstatt eines Triacs ist auch ein Thyristor oder ein anderer entsprechender elektronischer Schalter verwendbar.

Der bei einer durchgeschalteten Netzspannung stattfindende Stromfluß wird mittels eines Widerstandes RP03 detektiert, dessen Spannungsabfall gegenüber Masse über einem Widerstand RP04 an dem nichtinvertierenden Eingang eines Differenzverstärkers U1a anliegt. Dieser Spannungsabfall wird mit einer ersten mittels eines Spannungsteilers RP08, RP09 erzeugten Referenzspannung, die am zweiten, invertierenden Eingang des Differenzverstärkers U1a anliegt, verglichen. Ist der Triac Q2 durchgeschaltet und liegt ein höherer Spannungsabfall an dem Widerstand RP03 an, so wird der Ausgang des Differenzverstärkers U1a negativ und dadurch ein über einen Widerstand RP10 mit diesem Ausgang verbundenen Kondensator CP07 negativ aufgeladen.

Die an dem Kondensator CP07 anliegende Spannung wird mittels eines Differenzverstärkers U1b mit einer zweiten Referenzspannung, die in diesem Ausführungsbeispiel ca -1,5 V beträgt, verglichen. Unterschreitet die an dem Kondensator CP07 anliegende Spannung diese negative Referenzspannung, so wird der Ausgang des Differenzverstärkers U1b negativ und dadurch der Triac Q2 durchgeschaltet.

Der Kondensator CP07 bildet mit einem parallel geschalteten Widerstand RP13 ein RC-Glied mit einer Zeitkonstante von etwa 10 s. Wird das an der Ausgangsseite angeschlossene Gerät nun in den Standby-Betrieb geschaltet, so wird der über dem Widerstand RP03 anliegende Spannungsabfall sehr gering und damit größer als die an dem Differenzverstärker U1a anliegende negative Referenzspannung. Die Ausgangsspannung des Differenzverstärkers U1a geht dadurch hoch und der Kondensator CP07 entlädt seine negative Spannung über den Widerstand RP13. Nach einer gewissen Zeit hat die an dem Kondensator CP07 anliegende Spannung die an dem zweiten Differenzverstärker U1b anliegende negative Referenzspannung überschritten, so daß der Differenzverstärker U1b ausgangsseitig auf positiv schaltet und dadurch den Triac Q2 ab der nächsten Netzphase sperrt.

An dem Kondensator CP07 ist über eine Diode DP14 und einen Widerstand RP15 ein Ausgang eines Infrarot-Empfängers U2 angeschlossen. Dieser reagiert auf Signale von beliebigen Infrarot-Fernbedienungen. Bei Empfang von Signalen schaltet er eine negative Versorgungsspannung auf den Ausgang durch und lädt dadurch den Kondensator CP07 wieder auf eine negative Spannung auf. Dieses bewirkt jetzt wieder über den Differenzverstärker U1b ein Durchschalten des Triacs Q2 und somit geht das angeschlossene Gerät wieder in Betrieb wie von dem Benutzer gewünscht. Die Schaltung U3 ist ein zweiter Infrarot-Empfänger, der alternativ zu U2 betrieben werden kann, und spielt hier weiter keine Rolle.

An dem Steuereingang des Triacs Q2 ist außerdem ein Nullspannungsschalter angeschlossen, der zwei als Schalter beschaltete Transistoren TP01 und TP02 enthält. Über Dioden DP02, DP04, Zenerdioden DP01, DP03 und Widerstände RP01 und RP02 detektieren die Basen dieser beiden Transistoren TP01 und TP02 einen größeren Spannungsabfall über dem Triac Q2 und verhindern ein Durchschalten des Triacs Q2 für diesen Fall. Bei einem größeren Spannungsabfall über dem Triac Q2 wird bei einer positiven Halbwelle der Transistor TP01 und bei einer negativen Halbwelle der Transistor TP02 durchgeschaltet, wodurch eine eventuell an dem Steuereingang des Triacs Q2 anliegende negative Ausgangsspannung des Differenzverstärkers U1b kompensiert wird. Bei einer größeren Spannung einer gerade anliegenden Halbwelle wird der Triac Q2 also nicht durchgeschaltet. Die Netzspannung wird also nur bei einem ungefähren Spannungsminimum zwischen einer positiven und negativen Halbwelle zu dem ausgangsseitig angeschlossenen Gerät durchgeschaltet.

Die für den Betrieb der Anordnung benötigten Versorgungsspannungen werden durch ein passives Netzwerk transformatorlos erzeugt. An dem Anschluß BP01 wird eine Spannung abgegriffen und Kodensatoren CP01 und CP03 - CP05, parallelgeschaltet, zugeführt. Die Kondensatoren CC01 - CC05 bilden verlustlose Blindwiderstände und dienen als Vorschaltwiderstände für die Zenerdioden DP08 und DP11. Die Dioden DP06 und DP09 bewirken eine Gleichrichtung der Halbwellen, die gleichgerichteten Spannungen werden zusätzlich stablisiert durch Kondensatoren CP02 und CP05. Ein Widerstand RP20, der parallel geschaltet ist zu den Kapazitäten CP03, CP04 und CP05, bewirkt eine Entladung dieser Kapazitäten im Auszustand der Anordnung. Zwischen Netzanschluß BP01 und den Kondensatoren CP01, CP03, CP04 und CP05 kann zusätzlich noch ein Wiederstand RP24 zur Vergrößerung der Schaltungssicherheit geschaltet werden.

Die Anordnung enthält nur sehr wenige aktive Bauelemente, die zudem einen sehr geringen Energieverbrauch aufweisen. Für die beiden Differenzverstärker U1a und U1b kann vorteilhafterweise eine verlustarme integrierte Schaltung mit zwei Operationsverstärkern verwendet werden. Der Energieverbrauch der in der Figur 1 dargestellten Anordnung beträgt nur etwa 0,1 W, ist also sehr gering verglichen mit einem Gerät im Standby-Modus. Ein niedriger Energieverbrauch ist insbesondere bei Verwendung der Anordnung in einem separaten Modul notwendig, da es nicht abschaltbar ist und deshalb permanent mit der Netzspannung verbunden ist.

## Patentansprüche

1. Anordnung zur Abschaltung der Netzspannung eines elektrischen Gerätes, das mittels Fernbedienung bedienbar ist und einen verbrauchsarmen Standby-Betrieb aufweist, wobei die Anordnung die Netzspannung zu dem Gerät nach einer gewissen Zeit unterbricht, wenn sich dieses im Standby-Betrieb befindet, und die Anordnung bei Empfang von Signalen der Fernbedienung die Netzspannung zum dem Gerät durchschaltet**, dadurch gekennzeichnet**, daß die Anordnung ein transformatorloses, passives Netzwerk (CP01 - CP06, DP06 - DP11) mit Kondensatoren und Dioden für die Erzeugung ihrer internen Versorgungsspannung enthält.

2. Anordnung nach Anspruch 1, **, dadurch gekennzeichnet**, daß das Netzwerk mindestens einen Kondensator, der mit der Netzspannung verbunden ist, (CP01, CP03 - CP05) zur Erzeugung eines verlustarmen Blindwiderstandes, mindestens eine Diode (DP06, DP09) zur Gleichrichtung der Netzspannung und mindestens eine Zenerdiode (DP08, DP11) und einem Kondensator (CP02, CP06) zur Stabilisierung der erzeugten Versorgungsspannung enthält.

3. Anordnung nach Anspruch 1 oder 2, **, dadurch gekennzeichnet**, daß sie einen elektronischen Schalter (Q2) zur Unterbrechung der Netzspannung enthält, der zusätzlich durch einen Nullspannungschalter (TP01, TP02, DP01 - DP04, RP01, RP02, RP05, RP06) gesteuert wird.

4. Anordnung nach Anspruch 3, **, dadurch gekennzeichnet**, daß der Nullspannungschalter eine Schaltstufe (TP01, TP02) enthält, die bei einem höheren Spannungsabfall über dem elektronischen Schalter (Q2) ein an dessen Steuerelektrode angelegtes Steuersignal kompensiert.

5. Anordnung nach Anspruch 3 oder 4, **, dadurch gekennzeichnet**, daß der elektronische Schalter ein Triac (Q2) ist.

6. Anordnung nach einem der vorhergehenden Ansprüche, dadurch gekennzeichnet, daß sie in ein Fernsehgerät integriert ist.
